# EUROPEAN PATENT SPECIFICATION

(11) **EP 3 902 973 B1**
(45) Date of publication and mention of the grant of the patent: **14.10.2026**
(21) Application number: 19903059.4
(22) Date of filing: 26.12.2019
(51) Int. Cl.: E21B 23/02, E21B 33/04, G01S 15/08, E21B 47/14, G01S 7/521, G01S 15/87, G01S 15/88

(54) **SMART WELLHEAD**
INTELLIGENTER BOHRLOCHKOPF
TÊTE DE PUITS INTELLIGENTE

(30) Priority: 27.12.2018 US 201862785224 P
(43) Date of publication of application: 03.11.2021
(73) Proprietor: Cameron Technologies Limited, 2514 JG The Hague (NL)
(72) Inventor: LIM, Haw Keat, Singapore 629560 (SG); LEE, Yong Wee, Singapore 629560 (SG); MENON, Sanjay, Singapore 629560 (SG); VURUPUTOOR, Srivathsan Sudershan, Singapore 629560 (SG)
(74) Representative: Schlumberger Intellectual Property Department
(86) International application number: PCT/US2019/068576
(87) International publication number: WO 2020/139944

(56) References cited:
- WO-A1-2018/111882
- GB-A- 2 488 659
- US-A1- 2007 039 738
- US-A1- 2009 139 724
- US-A1- 2014 014 334
- US-A1- 2016 305 232
- US-A1- 2016 319 657
- US-A1- 2017 362 910
- US-A1- 2018 163 520
- US-B2- 6 725 924

## Description

### CROSS REFERENCE PARAGRAPH

This application claims the benefit of U.S. Provisional Application No. 62/785224, entitled "SMART WELLHEAD," filed December 27, 2018.

### TECHNICAL FIELD

The present disclosure relates to the installation of equipment, such as casing hangers, in wellheads. More specifically, certain embodiments of the present disclosure relate to identifying the location of equipment within a wellhead.

### BACKGROUND

A wellhead assembly, such as that employed for drilling and production operations, will often comprise an apparatus for retaining equipment and assemblies within the wellhead.

For instance, a casing or tubing hanger may be installed within the wellhead such that casings or tubings may be installed in the well suspended from the hanger. The hanger is typically landed within the bore of the wellhead assembly against a shoulder. The hanger assembly typically comprises one or more seals to seal against the inner wall of the wellhead assembly. The hanger assembly may comprise one or more assemblies for engaging with the wellhead, for example with one or more circumferential grooves formed in the inner wall of the wellhead assembly.

To verify landing of the hanger, many existing operations use a manual tally process combined with the manual measurement height at the rig floor. Such practices do not provide for a second verification on the landing shoulder of the wellhead and hanger inside the wellhead bore during landing. Further, the concentricity of the hanger is not able to be verified based on the quantitative process.

To verify lock down operations, many of the existing operations count the number of turns for a lockdown ring to be set and measure the vertical travel distance at the rig floor. The lockdown can then be verified by doing an overpull on the hanger.

US2016/0305232 and WO2018/111882 both show arrangements in which a sensor attached to a wellhead is able to send an electromagnetic or acoustic signal into the bore through the wellhead and a hanger which is being inserted into the wellhead carries a component which can send a response signal to the wellhead sensor when it comes into alignment with it. This provides detection of a position of the hanger in the wellhead. US2017/0362910 shows arrangements in which a sensor attached to a running tool may use various technologies to detect proximity of a target element attached to a wellhead.

### SUMMARY

This summary is provided to introduce a selection of concepts that are further described below in the detailed description. However, many modifications are possible without materially departing from the teachings of this disclosure. Accordingly, such modifications are intended to be included within the scope of this disclosure as defined in the claims. This summary is not intended to identify key or essential features of the claimed subject matter, nor is it intended to be used as an aid in limiting the scope of the claimed subject matter.

One aspect of the present invention, as defined in claim 1, provides a method of installing a hanger or a packoff at a target location within a wellhead, the wellhead having one or more ultrasonic sensors. The method includes lowering the hanger or the packoff within the wellhead to a target position at which the hanger or packoff is landed on a landing shoulder in the bore of the wellhead and using the one or more ultrasonic sensors to detect when the hanger or the packoff is at the target location by emitting a beam of ultrasonic waves into a bore of a wellhead assembly across the landing shoulder in the bore of the wellhead from a first ultrasonic sensor of the one or more sensors, the first ultrasonic sensor being located in a pressure containing housing outside the bore, and using an ultrasonic sensor of the one or more sensors to sense reflections of the ultrasonic waves from the hanger or the packoff, after the hanger or the packoff is landed on the landing shoulder or emitting a beam of the ultrasonic waves from a first ultrasonic sensor of the one or more sensors into the bore of the wellhead at a location axially offset from the landing shoulder, the first ultrasonic and sense passage of an edge of the hanger or the packoff past the location axially offset from the landing shoulder at which the beam of ultrasonic waves from the first ultrasonic sensor is emitted into the bore, and thereby determine that the hanger or the packoff has landed at the landing shoulder.

Another aspect of the present invention, as defined in claim 13, provides an apparatus that includes a wellhead assembly having a pressure-containing housing having a bore and a hanger or packoff configured to be lowered within the bore to a target position at which the hanger or packoff is landed on a landing shoulder in the bore of the housing and also includes at least one ultrasonic sensor positioned along the pressure-containing housing outside the bore with a first one of the sensors being configured to emit a beam of ultrasonic waves into the bore and either sense reflections of the ultrasonic waves from the hanger or packoff within the bore and determine a characteristic of the sensed reflections indicative of landing or locking of the hanger or packoff on the landing shoulder within the pressure-containing housing, or sense reflections of the ultrasonic waves from the hanger or packoff indicative of passage of an edge of the hanger past a location axially offset from the landing shoulder at which a beam of ultrasonic waves from the first ultrasonic sensor is emitted into the bore.

Various refinements of the features noted above may exist in relation to various aspects of the present embodiments. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. Again, the brief summary presented above is intended only to familiarize the reader with certain aspects and contexts of some embodiments without limitation to the claimed subject matter.

### BRIEF DESCRIPTION OF THE DRAWINGS

Certain embodiments of the disclosure will hereafter be described with reference to the accompanying drawings, wherein like reference numerals denote like elements. It is emphasized that, in accordance with standard practice in the industry, various features are not drawn to scale. In fact, the dimensions of various features may be arbitrarily increased or reduced for clarity of discussion. It should be understood, however, that the accompanying figures illustrate the various implementations described herein and are not meant to limit the scope of various technologies described herein, and:
FIG. 1 generally depicts various components, including one or more tubular strings and associated hangers, that can be installed at a well in accordance with one embodiment of the present disclosure;
FIG. 2 illustrates an embodiment of a digitally enabling wellhead with a hanger for installation within, in accordance with one embodiment;
FIGS. 3-5 generally depict hanger landing operations within wellhead housings, in accordance with some embodiments;
FIGS. 6 and 7 illustrate embodiments of the present disclosure wherein the digitally enabling wellhead includes sensors mounted to exterior surfaces of the wellhead;
FIGS. 8-10 generally depict hanger locking operations within wellhead housings in accordance with one embodiment;
FIGS. 11 and 12 generally depict the use of sensors for detecting positions of internal components within a wellhead assembly in accordance with some embodiments;
FIG. 13 is a block diagram of a programmable data analyzer that can be used to detect positions of internal components within a wellhead assembly housing in accordance with one embodiment; and
FIG. 14 is a flowchart representing a process for detecting location of a component within a bore at a desired position in accordance with one embodiment.

### DETAILED DESCRIPTION

Specific embodiments of the present disclosure are described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time-consuming, but would nevertheless be a routine undertaking of design, fabrication, and manufacture for those of ordinary skill having the benefit of this disclosure.

In the following description, numerous details are set forth to provide an understanding of some embodiments of the present disclosure. It is to be understood that the following disclosure provides many different embodiments, or examples, for implementing different features of various embodiments. Specific examples of components and arrangements are described below to simplify the disclosure. These are, of course, merely examples and are not intended to be limiting. In addition, the disclosure may repeat reference numerals and/or letters in the various examples. This repetition is for purposes of simplicity and clarity and does not in itself dictate a relationship between the various embodiments and/or configurations discussed. However, it will be understood by those of ordinary skill in the art that the system and/or methodology may be practiced without these details and that numerous variations or modifications from the described embodiments are possible. This description is not to be taken in a limiting sense, but rather made merely for purposes of describing general principles of the implementations. The scope of the described implementations should be ascertained with reference to the issued claims.

As used herein, the terms "connect", "connection", "connected", "in connection with", and "connecting" are used to mean "in direct connection with" or "in connection with via one or more elements"; and the term "set" is used to mean "one element" or "more than one element". Further, the terms "couple", "coupling", "coupled", "coupled together", and "coupled with" are used to mean "directly coupled together" or "coupled together via one or more elements". As used herein, the terms "up" and "down"; "upper" and "lower"; "top" and "bottom"; and other like terms indicating relative positions to a given point or element are utilized to more clearly describe some elements.

In this disclosure, unless the context requires otherwise, throughout the specification and claims which follow, the word "comprise" and variations thereof, such as, "comprises" and "comprising" are to be construed in an open, inclusive sense, that is as "including, but not limited to." Reference to "one implementation" or "an implementation" or to "one embodiment" or "an embodiment" means that a particular feature, structures, or characteristics may be combined in any suitable manner in one or more implementations or one or more embodiments. The singular forms "a," "an," and "the" include plural referents unless the context clearly dictates otherwise. It should also be noted that the term "or" is generally employed in its broadest sense, that is, as meaning "and/or" unless the context clearly dictates otherwise.

The present disclosure describes a digitally enabling wellhead used to verify wellhead operations are done correctly. Such verification can help ensure safety at the wellsite and avoid non-productive time resulting from the need to correct improper installations. As will be described herein, the digitally enabling wellhead of the present disclosure may be used to verify operations through one or more sensors installed on the wellhead. In some embodiments, such a wellhead may provide an improved manner of landing and securing assemblies, such as tubing or casing hangers, within the bore of a wellhead, such that the precise location of the assemblies and the state of the lockdown is known and verifiable. Although the example wellhead operations described herein include hanger landing, concentricity, and lock down verification, it should be understood that the digitally enabling wellhead of the present disclosure is not so limited and may be used for any number of wellhead operations.

Certain embodiments of the digitally enabling wellhead are described herein. These useacoustic and ultrasonic sensors. It should be understood that the sensors may be installed on the wellhead prior to the wellhead being sent to the field or the sensors may be assembled to the wellhead in the field location (e.g., by a service technician).

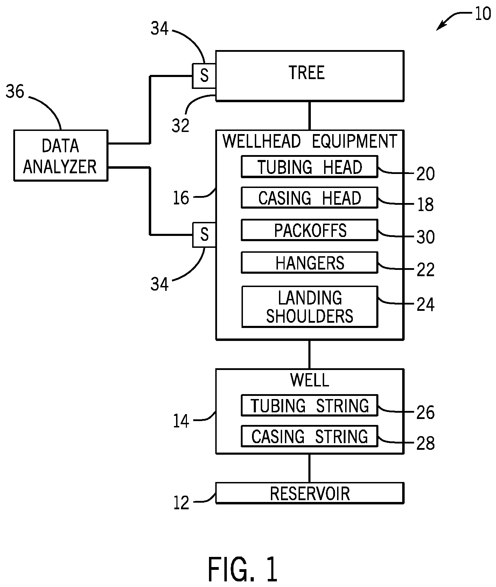

Turning now to the present figures, a system 10 is illustrated in FIG. 1 in accordance with one embodiment. The system 10 includes a wellhead assembly that facilitates extraction of a resource, such as oil, from a reservoir 12 through a well 14. The wellhead assembly includes wellhead equipment 16 installed on the well 14. As depicted, the wellhead equipment 16 includes at least one casing head 18 and tubing head 20, as well as wellhead hangers 22 and landing shoulders 24. But the components of the wellhead equipment 16 can differ between applications, and could include a variety of casing heads, tubing heads, spools, hangers, sealing assemblies (e.g., packoffs 30), stuffing boxes, pumping tees, and pressure gauges, to name only a few possibilities.

The wellhead hangers 22 can be positioned on landing shoulders 24 within hollow pressure-containing housings of the wellhead (e.g., within the tubing and casing heads). These landing shoulders 24 can be integral parts of tubing and casing heads or can be provided by other components, such as sealing assemblies, landing rings, or other hangers 22 disposed in the tubing and casing heads. Each of the hangers 22 can be connected to a tubular string, such as a tubing string 26 or a casing string 28, to suspend the string within the well 14. The well 14 can include a single casing string 28 or include multiple casing strings 28 of different diameters, which may be cemented in place within the well 14. In some embodiments, the wellhead assembly includes a tree 32 (e.g., a production tree) coupled to the wellhead equipment 16. In other instances, wellhead assemblies could also or instead include other components coupled to the wellhead equipment 16, such as blowout preventers, drilling adapters, connecters, or the like.

A bore through the wellhead assembly allows objects, such as a drill string or various tools, to pass into the well 14. Various internal wellhead objects, such as hangers 22, packoffs 30, or locking assemblies, can be lowered into the bore and landed within a pressure-containing housing of the wellhead assembly. The wellhead assembly in FIG. 1 includes sensors 34 for sensing the position of internal wellhead objects within the bore of the wellhead assembly, as discussed in greater detail below. The sensors 34 are shown coupled to the wellhead equipment 16 and the tree 34 in FIG. 1 but could also or instead be positioned elsewhere (e.g., on drilling adapters or blowout preventers). The sensors 34 are or include one or more ultrasonic sensorsIn some instances the sensors 34 may include combinations of ultrasonic sensors with acoustic sensors, proximity sensors, magnetic sensors, or optical sensors. Any suitable controllers may be used to control operation of the sensors 34.

A data analyzer 36 may receive and process data or other signals from the sensors 34, such as to determine the position of an internal wellhead object within the bore. In at least some embodiments, the data analyzer 36 is a processor-based system (e.g., a computer). The sensors 34 may communicate with the data analyzer 36 through wired or wireless interfaces. The data analyzer 36 could be positioned near the wellhead assembly or at a remote location. In some embodiments, the data analyzer 36 may be a distributed system with some portion located near the wellhead assembly (e.g., for data collection and initial processing) and another portion located remotely (e.g., for additional processing or data aggregation).

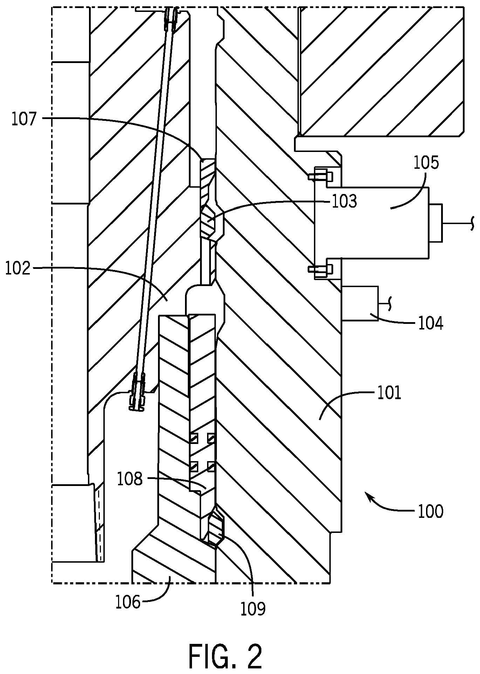

An embodiment of the digitally enabling wellhead, referred to generally as 100, is illustrated in FIG. 2. A hanger 102 is shown ready for installation within a pressure-containing housing 101 of the wellhead 100. The illustrated hanger 102 (e.g., a tubing hanger) comprises a lockdown mechanism, including a lockdown ring 103 and an actuator 107, for securing the hanger 102 within the housing 101 once it is landed. It should be understood, however, that depending on the application and the type of hanger, other mechanisms for securing the hanger 102 within the housing 101 may be used and remain within the scope of the present disclosure. The hanger 102 can be landed on any suitable surface. In FIG. 2, the hanger 102 is shown landed on another hanger 106 (e.g., a casing hanger), which is locked in place by lockdown ring 109, with a sealing packoff 108 between the hanger 106 and the inner wall (i.e., bore wall) of the housing 101.

The digitally enabling wellhead 100 comprises one or more sensors. In the embodiment shown in FIG. 2, the wellhead 100 comprises one or more acoustic sensors 104 and one or more ultrasonic sensors 105. Some embodiments of the present disclosure may use only one set of sensors or may use more than the two sets of sensors depicted in FIG. 2. The number and type of sensors is based on the intended application and intended operation or operations being monitored.

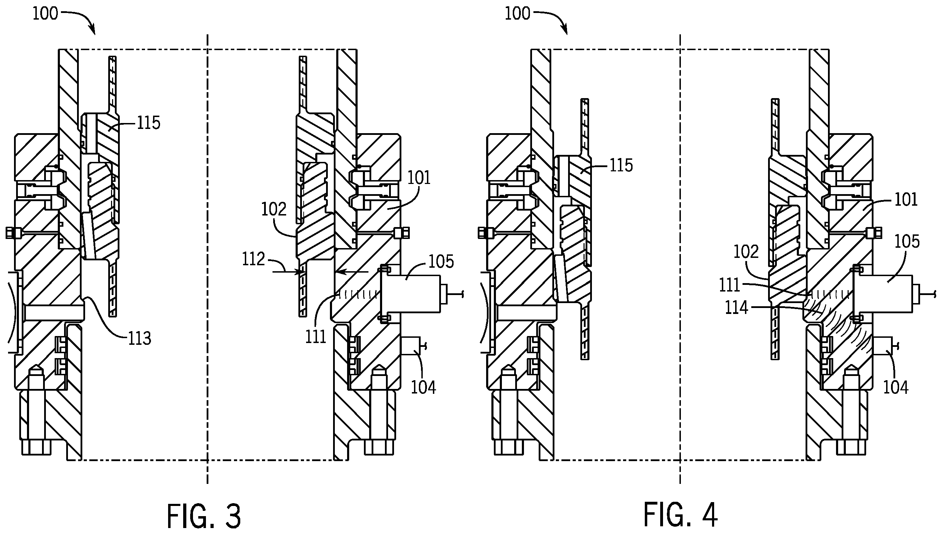

FIGS. 3 and 4 illustrate an embodiment of the digitally enabling wellhead 100 used to identify the landing position of a hanger 102 at a target location within the wellhead. More specifically, these generally depict a hanger landing operation in which the hanger 102 is lowered within the wellhead 100 (FIG. 3) and then landed on a landing shoulder 113 (FIG. 4) in the bore of the housing 101. The hanger 102 can be lowered into the bore with a running tool 115. The one or more acoustic sensors 104 are able to detect the acoustic signature of the hanger 102 (e.g., to detect the sound made by landing the hanger 102 on landing shoulder 113, as represented by sound waves 114 in FIG. 4) to indicate that the hanger 102 is in the process of landing. The ultrasonic sensor 105 takes measurements to indicate that the hanger 102 has properly landed within the housing 101 at the target position.

The ultrasonic sensor 105 is positioned to emit ultrasonic waves (shown here generally as a beam 111 of ultrasonic waves) into the bore of the wellhead assembly and can be used to detect landing of the hanger 102 on the landing shoulder 113. The ultrasonic sensor may emit wave pulses or continuous waves. The ultrasonic sensor 105 emits ultrasonic waves that are at least partially reflected from objects (e.g., the hanger 102) in their path. In some embodiments, the ultrasonic sensor 105 is operated in a reflection mode (e.g., a pulse-echo mode) and both emits the ultrasonic waves into the bore and receives reflections of those waves from various material boundaries encountered by the waves, such as the outer surface of the housing 101, the inner surface of the housing 101, and the outer surface of the hanger 102. It will be appreciated that the ultrasonic sensor 105 can be used to sense an ultrasonic signature of an observed region based on the time-of-flight, intensity, or other characteristics of the reflected ultrasonic waves received by the ultrasonic sensor 105, and that these characteristics will depend on distances traveled and materials encountered by the ultrasonic waves.

In some embodiments, the ultrasonic sensor 105 can be used to measure a distance between the ultrasonic sensor 105 and the hanger 102 (e.g., the total distance between the ultrasonic sensor 105 and the hanger 102 or a distance across gap 112 between the hanger 102 and the bore wall of the housing 101) based on the emission, reflection, and sensing of the ultrasonic waves. When the hanger 102 is positioned as shown in FIG. 3, the gap 112 between the outer surface of the lower end of the hanger 102 is sensed using the ultrasonic sensor 105 and indicates that the hanger 102 has not landed on the shoulder 113. As depicted in FIG. 4, however, once landed on the shoulder 113, a wider portion of the hanger 102 is positioned in front of the ultrasonic beam 111 and reflects ultrasonic waves back to the ultrasonic sensor 105. The ultrasonic waves reflected from the outer surface of the hanger 102 in FIG. 4 arrive at the sensor 105 faster than the ultrasonic waves that were reflected from the lower, narrower end of the hanger 102 toward which the beam 111 is emitted in FIG. 3. This difference may be sensed and used to identify the location of the hanger 102 within the bore. One or more ultrasonic sensors 105 may also or instead be used to identify the location of some other object within the bore, such as a packoff or a running tool.

As shown in FIGS. 3 and 4, the ultrasonic sensor 105 is positioned at an axial location along the housing 101 to emit the beam 111 of ultrasonic waves toward the landing shoulder 113 in a plane perpendicular to the axis of the housing 101 (e.g., with the beam 111 emitted radially inward into the bore). In this arrangement, the presence of the hanger 102 on the shoulder 113 causes a detectable difference in the ultrasonic signature sensed by the ultrasonic sensor 105 (e.g., in the timing of the receipt of ultrasonic waves received by the sensor 105) and allows detection of the landing of the hanger 102 on the shoulder 113. But the one or more ultrasonic sensors 105 can be positioned elsewhere in other embodiments. Additionally, while the ultrasonic sensor 105 depicted in FIGS. 3 and 4 can be used in a reflection mode to both send ultrasonic waves and receive reflections of those ultrasonic waves, in other instances multiple ultrasonic sensors 105 could be used in a pitch-catch mode in which one sensor 105 emits ultrasonic waves and another sensor 105 receives those ultrasonic waves. Any suitable ultrasonic transducers may be used in the sensors 105, such as single-element, dual-element, annular, linear, or phased-array transducers emitting at any suitable ultrasonic frequency.

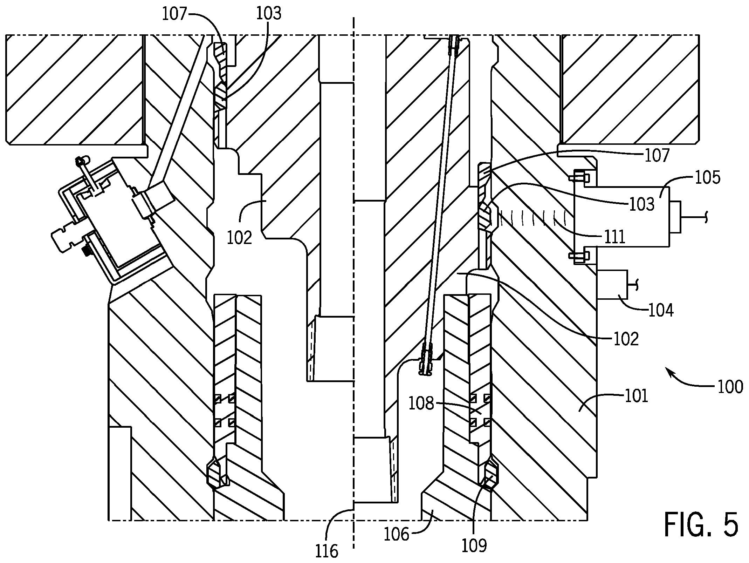

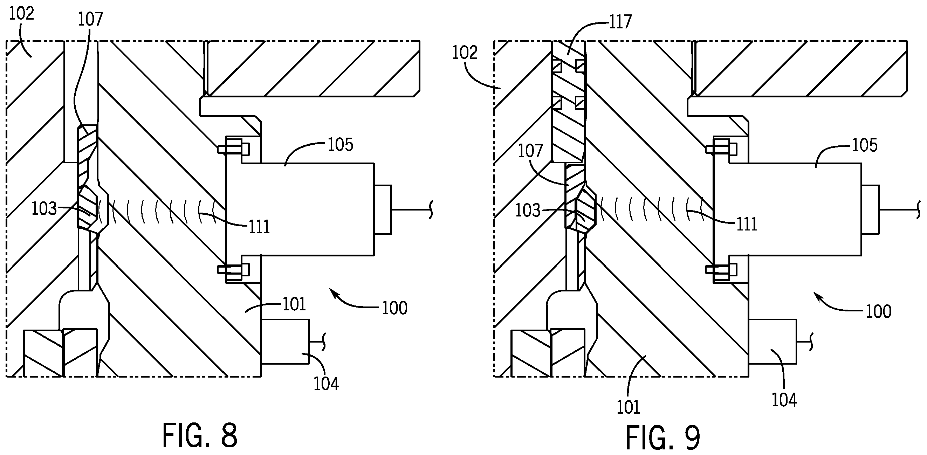

Another example of a hanger landing operation in a wellhead 100 is depicted in FIG. 5. In this embodiment, a hanger 102 is lowered into and landed in a bore of the housing 101. The left side of FIG. 5 (to the left of dashed vertical line 116) shows the hanger 102 being lowered into the bore, while the right side shows the hanger 102 landed within the bore (i.e., on an upper end of another hanger 106). Sensors 104 or 105 can be used to detect landing of the hanger 102, such as described above. But the ultrasonic sensor 105 shown in FIG. 5 is positioned to detect when a lockdown mechanism has secured the hanger 102 within the wellhead 100, as discussed in more detail below with respect to FIGS. 8-10.

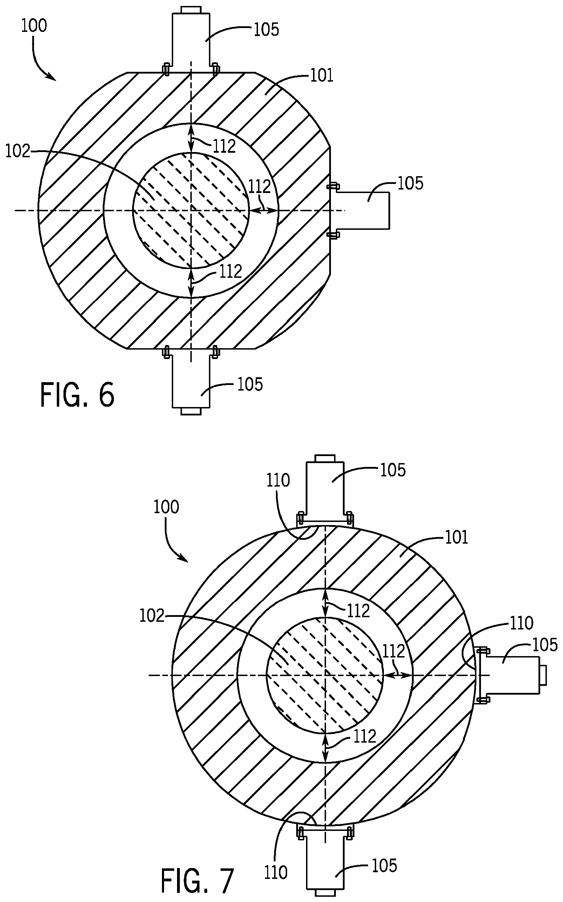

FIGS. 6 and 7 illustrate wellheads 100 having sensors 105 coupled to exterior surfaces of housings 101 in accordance with some embodiments. In these depicted embodiments, there are three ultrasonic sensors 105 but it should be understood that the present disclosure is not so limited. Any number of ultrasonic sensors 105 may be used and remain within the purview of the present disclosure. In FIG. 6, the ultrasonic sensors 105 are shown mounted on flat sides of the exterior surface of the housing 101. In contrast, in FIG. 7 the ultrasonic sensors 105 include curved contact surfaces 110 that mate with curved outward-facing surfaces of the housing 101. While the mating curved surfaces may take different forms, in at least some embodiments the curved contact surfaces 110 are concave surfaces and the curved outward-facing surfaces of the housing are convex. The contact surfaces 110 can be provided on sensor windows or connection adapters of the sensors 105.

In some embodiments, the digitally enabling wellhead 100 takes concentricity measurements within the housing 101 to verify that the hanger 102 has been landed concentric with the central bore of the housing 101. In the axial partial section views of FIGS. 6 and 7, the hanger 102 is shown schematically as being within the bore of the housing 101. The ultrasonic sensors 105 can be used to take measurements inside the housing 101 to verify the position of the hanger 102 between the respective sensors 105. Such measurements are used to verify whether the hanger 102 is positioned concentrically within the housing 101. Respective gaps 112 between the hanger 102 and the bore wall are sensed and any differences between the widths of the gaps 112 (e.g., which may be detected by different ultrasonic signatures or measured distances) can be used to determine concentricity of the hanger 102 within the bore.

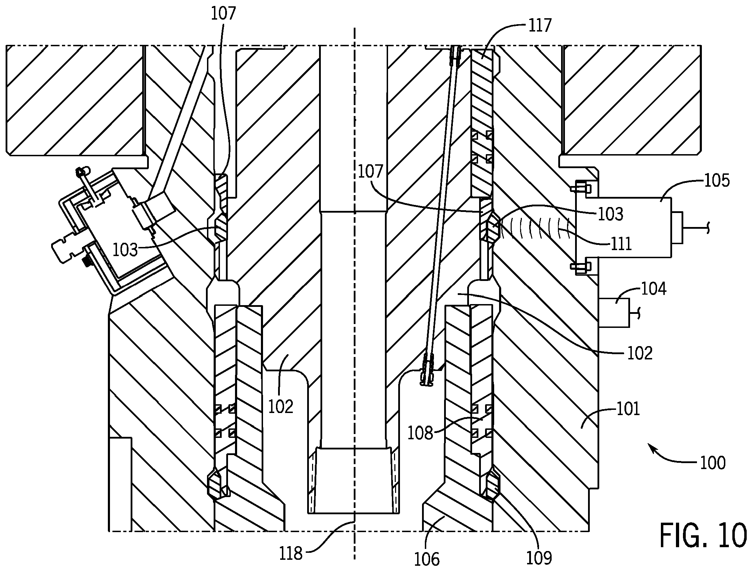

FIGS. 8-10 illustrate an embodiment of the digitally enabling wellhead 100 used to identify that the hanger 102 has been properly locked down once landed in the housing 101. FIGS. 8 and 9 are detail views of the hanger 102 and a lockdown mechanism within the housing 101 and show a lockdown ring 103 in an unlocked position (FIG. 8) and in a locked position (FIG. 9). FIG. 10 is a wider view of the hanger 102 and the lockdown mechanism within the housing 101, in which the lockdown ring 103 is shown unlocked on the left side of FIG. 10 (to the left of dashed vertical line 118) and locked on the right side. When the hanger 102 is landed within the bore, the locking mechanism can be activated by moving the actuator 107 downward to drive the lockdown ring 103 (e.g., an inwardly-biased C-ring) radially outward into a mating recess in the housing 101 (e.g., in the bore wall). A packoff 117 may be installed to seal the annular space above the actuator 107 between the hanger 102 and the bore wall. While the hanger 102 has a lockdown ring 103 for securing the hanger 102 within the housing 101 in this depicted embodiment, alternate locking mechanisms may be used and sensed by the digitally enabling wellhead 100 of the present disclosure.

As shown in FIGS. 8 and 9, the one or more ultrasonic sensors 105 can be used to detect the position of the lockdown ring 103 within the housing 101. Thus, once the hanger 102 has been landed and the lockdown ring 103 has been actuated or otherwise moved into the locked position, the one or more ultrasonic sensors 105 can be used to verify that the hanger 102 has been properly locked down. For instance, the ultrasonic sensor 105 depicted in FIGS. 8 and 9 is axially arranged along the housing 101 to emit ultrasonic waves toward (e.g., radially inward to) the lockdown ring 103. As discussed above, the ultrasonic sensor 105 can take any suitable form and can operate in any suitable manner. In at least some embodiments, the ultrasonic sensor 105 operates in a reflection mode, emitting a beam 111 of ultrasonic waves toward the lockdown ring 103 and receiving reflections (echoes) of the ultrasonic waves from the lockdown ring 103. From the description above, it will also be appreciated that the ultrasonic signature or distance measured by the sensor 105 depends on the distance between the sensor 105 emitting the ultrasonic waves and the lockdown ring 103 reflecting the ultrasonic waves. Consequently, the relative positions of the lockdown ring 103 in unlocked and locked positions can be determined and movement of the lockdown ring 103 radially outward from the unlocked position to the locked position can be detected with one or more sensors 105.

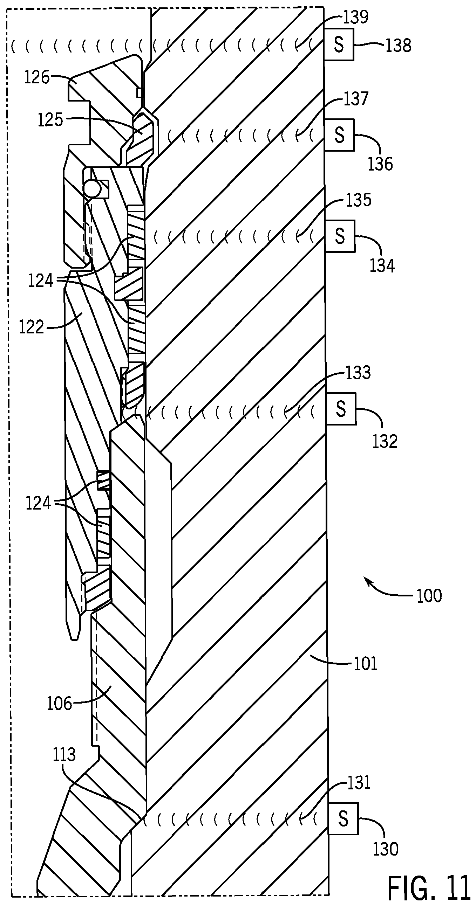

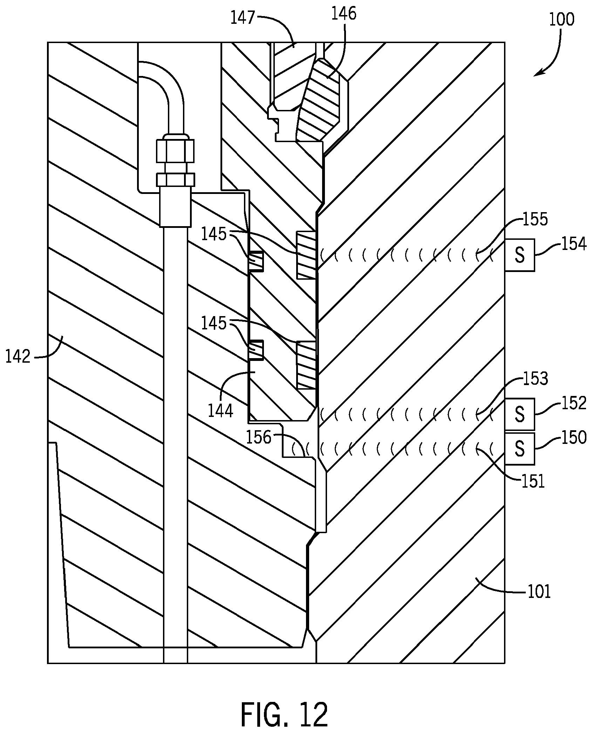

By way of further example, FIGS. 11 and 12 generally depict sensors for detecting positions of internal components within a wellhead assembly. In FIG. 11, a hanger 106 is shown landed on a landing shoulder 113 in a bore of housing 101 of the wellhead 100. A packoff 122 with various seals 124 is installed in the bore above the hanger 106. The packoff 122 includes a lockdown mechanism with a lockdown ring 125 and an actuator 126. The lockdown ring 125 is shown held by the actuator 126 in a locked position in a corresponding recess of the bore wall of the housing 101, but the actuator 126 could be raised to allow the lockdown ring 125 to radially contract to an unlocked position. The depicted wellhead 100 includes various sensors to detect positions of internal components within the bore of the housing 101. Although the sensors could take any other suitable form, the sensors are ultrasonic sensors in some embodiments.

More specifically, in FIG. 11 an ultrasonic sensor 130 is aligned with the landing shoulder 113 and emits a beam 131 of ultrasonic waves into the bore across the landing shoulder. The ultrasonic sensor 130 and beam 131 may be used to detect landing of the hanger 106 on the shoulder 113, such as described above. An ultrasonic sensor 132 is generally aligned with the target location of the upper end of the hanger 106 and emits a beam 133 of ultrasonic waves into the bore at an axial location above the top of the hanger 106 when the hanger 106 is properly landed on the shoulder 113. Whereas the sensor 130 may be used to detect landing of the hanger 106 by detecting a decrease in the distance between the bore wall and the hanger 106 that occurs upon landing, the sensor 132 detects passage of an edge of the hanger 102 (in this case, the upper end of the hanger 102) out of the path of the beam 133. That is, ultrasonic waves of beam 133 that had been reflected by the side of the hanger 102 as it passed through the beam 133 are no longer reflected by the hanger 102 once the hanger 102 is lowered below the path of the beam 133. In at least one embodiment, the ultrasonic sensors 130 and 132 may be used to independently detect landing of the hanger 106 on the shoulder 113.

Additionally, an ultrasonic sensor 134 is shown in FIG. 11 positioned to emit a beam 135 of ultrasonic waves into a seal 124 of the packoff 122 when the packoff 122 is positioned at a desired location within the bore. The seal 124 can be made of a different material (e.g., elastomer) than the body of the packoff 122. This impacts the ultrasonic signature based on the reflected waves sensed by the sensor 134 and may allow the sensor 134 to be used to detect that the seal 124 is positioned at a target location within the bore. An ultrasonic sensor 136 is positioned to emit a beam 137 of ultrasonic waves toward the lockdown ring 125 and may be used to determine whether the lockdown ring 125 is locked or unlocked, such as described above. An ultrasonic sensor 138 is generally aligned with a target location of the upper end of the packoff 122 and emits a beam 139 of ultrasonic waves into the bore above the top of the actuator 126. The ultrasonic sensor 138 could be used to detect landing of the packoff 122 in some instances, like described above for sensor 132. But in some embodiments, the ultrasonic sensor 138 is positioned to emit the beam 139 above the top of the actuator 126 once the actuator 126 is moved downward to a position that moves the lockdown ring 125 into its locked position. In this case, the sensor 138 can be used to detect that the hanger 106 and packoff 122 are locked in place based on detection that the actuator 126 has passed through the beam 139.

In FIG. 12, a tubing hanger 142 is shown landed on a shoulder in the bore of a wellhead housing 101. A packoff 144 with seals 145 is installed in an annular space between the hanger 142 and the bore wall and can be locked in place with a lockdown ring 146 and actuator 147. An ultrasonic sensor 150 is positioned to emit a beam 151 of ultrasonic waves toward the hanger 142. More specifically, the sensor 150 is aligned so as to sense passage of an edge 156 of the hanger 142 out of the beam 151, allowing detection of landing of the hanger 142 on the shoulder in a manner similar to that described above for ultrasonic sensor 132. An ultrasonic sensor 152 is positioned to emit a beam 153 of ultrasonic waves toward the bottom end of the packoff 144 and may be used to detect presence of the packoff 144 at a target location. And like sensor 134, an ultrasonic sensor 154 may be positioned to emit a beam 155 of ultrasonic waves to detect the presence of a seal 145 at a target location in the bore. In still further embodiments, an ultrasonic sensor can be provided along a drilling adapter of the wellhead assembly to detect a groove or other surface of a running tool or landing string. In some instances, the groove or other surface is located (with respect to a hanger or packoff) such that the groove or other surface passes into or out of an ultrasonic beam from the sensor upon landing of the hanger or packoff at a target location within the bore. This allows the sensor along the drilling adapter to be used to detect landing of the hanger or packoff lowered into the bore via the running tool or landing string.

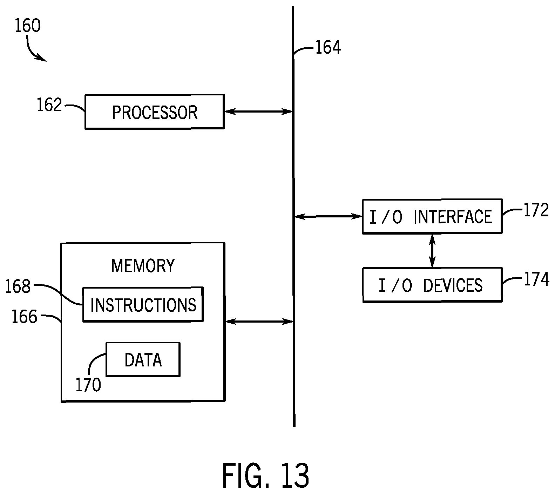

It is noted that a data analyzer 36 for implementing various functionality described above can be provided in any suitable form. In at least some embodiments, such a data analyzer 36 is provided in the form of a processor-based system, an example of which is generally depicted in FIG. 13 and denoted by reference numeral 160. In this depicted embodiment, the system 160 includes a processor 162 connected by a bus 164 to a memory device 166. It will be appreciated that the system 160 could also include multiple processors or memory devices, and that such memory devices can include volatile memory (e.g., random-access memory) or non-volatile memory (e.g., flash memory and a read-only memory). The one or more memory devices 166 are encoded with application instructions 168 (e.g., software executable by the processor 162 to perform various functionality described above), as well as with data 170 (e.g., locations sensed by given sensors, geometries of components of wellhead 100, and reference acoustic and ultrasonic signatures to which sensed signatures can be compared). For example, the application instructions 168 can be executed to process data representative of ultrasonic or acoustic waves received by the sensors to determine whether an internal wellhead object has landed in the bore or whether a lockdown mechanism has been activated. In one embodiment, the application instructions 168 are stored in a read-only memory and the data 170 is stored in a writeable non-volatile memory (e.g., a flash memory).

The system 160 also includes an interface 172 that enables communication between the processor 162 and various input or output devices 174. The interface 172 can include any suitable device that enables such communication, such as a modem or a serial port. The input and output devices 174 can include any number of suitable devices. For example, in one embodiment the devices 174 include one or more sensors, such as those described above, for providing input to be used by the system 160 to detect landing, locking, concentricity, material, or other characteristics of objects in the bore. The devices 174 may also include a keyboard or other interface that allows user-input to the system 160, and a display, printer, or speaker to output information from the system 160 to a user, such as a visual or audio indication that a hanger, packoff, or other object has landed or is locked within the wellhead 100. In some embodiments, the devices 174 include a computer or handheld device that can be used by a service technician near the wellhead 100.

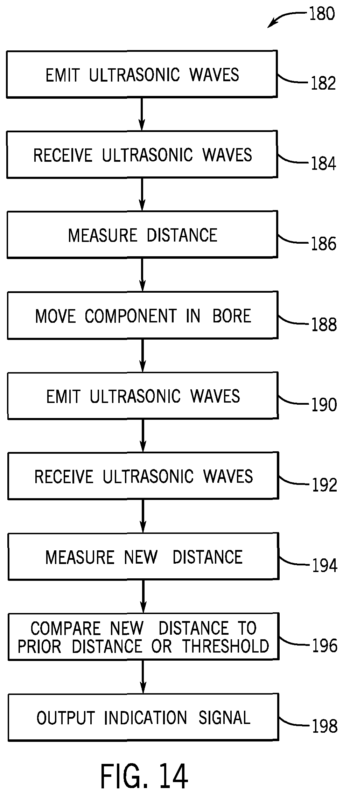

From the above description, it will be appreciated that some embodiments include processes for locating a component lowered into a wellhead assembly bore and, in more particular cases, detecting landing, locking, or concentricity of a component in the bore. FIG. 14 depicts a flowchart 180 representing a process for detecting movement of a component within a bore to a desired position in accordance with one embodiment. The process includes emitting and receiving ultrasonic waves (blocks 182 and 184) with one or more ultrasonic sensors. As described above, the emitted waves can be reflected off of an object lowered into the wellhead assembly bore (e.g., a hanger, packoff, or lockdown ring) and sensed to measure a distance (block 186) indicative of the location of the object, such as a distance between the object and the bore wall or between the object and an ultrasonic sensor.

After the component is further moved in the bore (block 188), ultrasonic waves can again be emitted and received (blocks 190 and 192) with the one or more ultrasonic sensors and a new distance indicative of the location of the object can be measured (block 194). The new distance can be compared (block 196) with the previous distance (e.g., to detect a difference between the measured distances corresponding to passage of a particular edge or surface of the object into or out of an ultrasonic beam) or with a threshold amount to detect landing or locking of an object within the bore. A threshold amount, for example, can represent a maximum (or minimum) width for a distance between the object and the bore wall (or sensor) at which the component will still be considered to be landed (e.g., in the case of a hanger or packoff) or locked (e.g., in the case of a lockdown ring). The measured distances can be used to confirm proper landing, locking, or concentricity of the object in the bore, as discussed above. Indication signals may be output (block 198) to inform a user about whether the internal bore objects are landed, locked, or concentric in the bore. In some embodiments, visual or audio indications are provided to a service technician to allow the technician to quickly verify proper landing, locking, and concentricity of objects within the wellhead assembly.

It should be understood that embodiments of the present disclosure may result in the following improved installation efficiency. For instance, installations may be faster and more reliable, unnecessary personnel can be removed and may not needed for equipment integrity, and real time equipment performance data can be provided in the field. It should be further understood that embodiments of the present disclosure may result in improved service quality performance. Unplanned downtime may be avoided, especially for remote well sites, better service confidence may result, and binary decision-making can be utilized, removing dependency on servicemen experience. Additionally, the present disclosure results may provide improved health, safety, and environment (HSE).

Although a few embodiments of the disclosure have been described in detail above, those of ordinary skill in the art will readily appreciate that many modifications are possible without materially departing from the teachings of this disclosure. Accordingly, such modifications are intended to be included within the scope of this disclosure as defined in the claims. The scope of the invention should be determined only by the language of the claims that follow. The term"comprising" within the claims is intended to mean"including at least" such that the recited listing of elements in a claim are an open group. The terms"a," "an" and other singular terms are intended to include the plural forms thereof unless specifically excluded. In the claims, means-plus-function clauses are intended to cover the structures described herein as performing the recited function and not only structural equivalents, but also equivalent structures.

## Claims

1. A method of installing a hanger (22, 102) or a packoff (30, 122) at a target location within a wellhead (100), the wellhead having one or more sensors (104, 105), the method comprising:
lowering the hanger or the packoff within the wellhead to a target position at which the hanger or packoff is landed on a landing shoulder in the bore of the wellhead;
whereby using the one or more sensors to detect when the hanger or the packoff is at the target location by:
emitting a beam (131) of ultrasonic waves into a bore of a wellhead assembly across the landing shoulder in the bore of the wellhead (100) from a first ultrasonic sensor (105, 130) of the one or more sensors, the first ultrasonic sensor being located along a pressure containing housing outside the bore, and using an ultrasonic sensor (105, 130) of the one or more sensors to sense reflections of the ultrasonic waves from the hanger (22, 102) or the packoff (30, 122) after the hanger or the packoff is landed on the landing shoulder,
or emitting a beam (133, 139) of the ultrasonic waves from a first ultrasonic sensor of the one or more sensors into the bore of the wellhead (100) at a location axially offset from the landing shoulder, the first ultrasonic sensor being located in a pressure containing housing outside the bore, and using an ultrasonic sensor (105, 130) of the one or more sensors to sense reflections of the ultrasonic waves from the hanger (22, 102) or the packoff (30, 122) and sense passage of an edge of the hanger (22, 102) or the packoff (30, 122) past the location axially offset from the landing shoulder at which the beam (133, 139) of ultrasonic waves from the first ultrasonic sensor is emitted into the bore,
and thereby determine that the hanger or the packoff has landed at the landing shoulder.

2. The method of claim 1, wherein using the one or more ultrasonic sensors to detect when the hanger or the packoff is at the target location includes:
measuring a distance from the first ultrasonic sensor (105, 130) to the hanger (22, 102) or the packoff (30, 122) based on the sensed reflections; and
outputting a signal indicating the hanger or the packoff is at the target location based on the measured distance from the first ultrasonic sensor to the hanger or the packoff.

3. The method of claim 1 wherein using the one or more ultrasonic sensors to detect when the hanger or the packoff is at the target location comprises:
emitting a beam (131) of ultrasonic waves across the landing shoulder in the bore of the wellhead from a first ultrasonic sensor (105, 130) of the one or more sensors and using an ultrasonic sensor of the one or more sensors to sense reflections of the ultrasonic waves from the hanger or the packoff (30, 122) after the hanger or the packoff is landed on the landing shoulder and thereby determine that the hanger or the packoff has landed at the landing shoulder
emitting a beam (133, 139) of the ultrasonic waves from a second ultrasonic sensor (132, 138) of the one or more sensors into the bore of the well head (100) at a location axially offset from the landing shoulder and using an ultrasonic sensor of the one or more sensors to sense reflections of the ultrasonic waves from the hanger (22, 102) or the packoff (30, 122) and sense passage of an edge of the hanger (22, 102) or the packoff (30, 122) past the location axially offset from the landing shoulder at which the beam (133, 139) of ultrasonic waves from the first ultrasonic sensor is emitted into the bore and thereby independently determine that the hanger or the packoff has landed at the landing shoulder, and
based on the independent detection via each of the first ultrasonic sensor and the second ultrasonic sensor that the hanger or the packoff is at the target location, outputting a signal indicating that the hanger or the packoff is at the target location.

4. The method of claim 1, claim 2 or claim 3, further comprising using the one or more ultrasonic sensors (105) to detect concentricity of the hanger (22, 102) or the packoff (30, 122) in a bore of a wellhead assembly including the wellhead.

5. The method of claim 1, claim 2 or claim 3, further comprising using the one or more ultrasonic sensors (134) to detect the position of a seal (124) in a bore of a wellhead assembly including the wellhead.

6. The method of claim 1, claim 2 or claim 3, wherein the hanger has a locking mechanism (103) to secure the hanger within the wellhead, and the method further comprises:
activating the locking mechanism (103); and
using the one or more ultrasonic sensors (105, 136, 138) to detect when the locking mechanism has secured the hanger within the wellhead.

7. The method of claim 6, wherein the one or more ultrasonic sensors include a first sensor (130) and a second sensor (132, 136), using the one or more ultrasonic sensors to detect when the hanger (22, 102) is at the target location includes using the first sensor (130) to detect when the hanger is at the target location, and using the one or more ultrasonic sensors to detect when the locking mechanism (103) has secured the hanger within the wellhead includes using the second sensor (132, 136) to detect when the locking mechanism (103) has secured the hanger within the wellhead.

8. The method of claim 7, wherein the first sensor (130) and the second sensor (132, 136) are positioned at different axial locations along the wellhead.

9. The method of claim 6, wherein using the one or more ultrasonic sensors to detect when the locking mechanism (103) has secured the hanger (22, 102) within the wellhead (100) includes using the one or more ultrasonic sensors to detect movement of a component (125) of the locking mechanism radially outward into a recess of the wellhead.

10. The method of claim 9, wherein using the one or more ultrasonic sensors to detect movement of the component (125) of the locking mechanism (103) radially outward into the recess of the wellhead includes:
sensing a first ultrasonic signature from ultrasonic signals emitted from and received by the one or more ultrasonic sensors (105) before activating the locking mechanism, wherein the first ultrasonic signature depends on a distance of the component (125) of the locking mechanism from the one or more ultrasonic sensors; and
sensing a second ultrasonic signature from ultrasonic signals emitted from and received by the one or more ultrasonic sensors after activating the locking mechanism, wherein the second ultrasonic signature depends on the distance of the component of the locking mechanism from the one or more ultrasonic sensors and differs from the first ultrasonic signature due to the movement of the component (125) of the locking mechanism radially outward into the recess of the wellhead.

11. The method of claim 6, wherein the locking mechanism (103) includes a lockdown ring (125).

12. The method of any preceding claim wherein the ultrasonic sensor (105, 130) to sense reflections of the ultrasonic waves from the hanger (22, 102) or the packoff (30, 122) is coupled to an outward facing surface of the wellhead assembly.

13. An apparatus comprising:
a wellhead assembly including a pressure-containing housing (101) having a bore and a hanger (22, 102) or packoff (30, 122) configured to be lowered within the bore to a target position at which the hanger or packoff is landed on a landing shoulder in the bore of the housing (101)
wherein the assembly comprises one or more ultrasonic sensors (105) positioned along the pressure-containing housing (101) outside the bore with a first one of the sensors (105) being configured to emit a beam (131, 133, 139) of ultrasonic waves into the bore and either
to sense reflections of the ultrasonic waves from the hanger or packoff within the bore, and determine a characteristic of the sensed reflections indicative of landing or locking of the hanger or packoff on the landing shoulder within the pressure-containing housing, or
to sense reflections of the ultrasonic waves from the hanger or packoff indicative of passage of an edge of the hanger (22, 102) past a location axially offset from the landing shoulder at which a beam (133, 139) of ultrasonic waves from the first ultrasonic sensor is emitted into the bore.

14. The apparatus of claim 12, wherein the one or more ultrasonic sensors include an ultrasonic sensor (105) coupled to the pressure-containing housing (101), the pressure-containing housing has a curved outward- facing surface, and the ultrasonic sensor coupled to the pressure-containing housing includes a mating curved contact surface (110) engaging the curved outward-facing surface of the pressure-containing housing.

## Patentansprüche

1. Verfahren zum Installieren eines Hängers (22, 102) oder eines Packoffs (30, 122) an einer Zielstelle innerhalb eines Bohrlochkopfs (100), wobei der Bohrlochkopf einen oder mehrere Sensoren (104, 105) aufweist, das Verfahren umfassend:
Absenken des Hängers oder des Packoffs innerhalb des Bohrlochkopfs zu einer Zielposition, an der der Hänger oder der Packoff auf einem Absetzvorsprung in der Bohrung des Bohrlochkopfs abgesetzt wird;
wobei der eine oder die mehreren Sensoren verwendet werden, um zu detektieren, wann der Hänger oder der Packoff an der Zielstelle ist, durch:
Emittieren eines Strahls (131) von Ultraschallwellen in eine Bohrung einer Bohrlochkopfanordnung über den Absetzvorsprung in der Bohrung des Bohrlochkopfs (100) von einem ersten Ultraschallsensor (105, 130) des einen oder der mehreren Sensoren, wobei sich der erste Ultraschallsensor entlang eines druckfesten Gehäuses außerhalb der Bohrung befindet und Verwenden eines Ultraschallsensors (105, 130) des einen oder der mehreren Sensoren, um Reflexionen der Ultraschallwellen von dem Hänger (22, 102) oder dem Packoff (30, 122) zu erfassen, nachdem der Hänger oder der Packoff auf dem Absetzvorsprung abgesetzt wurde,
oder Emittieren eines Strahls (133, 139) der Ultraschallwellen von einem ersten Ultraschallsensor des einen oder der mehreren Sensoren in die Bohrung des Bohrlochkopfs (100) an einer Stelle, die von dem Absetzvorsprung axial versetzt ist, wobei sich der erste Ultraschallsensor in einem druckfesten Gehäuse außerhalb der Bohrung befindet und Verwenden eines Ultraschallsensors (105, 130) des einen oder der mehreren Sensoren, um Reflexionen der Ultraschallwellen von dem Hänger (22, 102) oder dem Packoff (30, 122) zu erfassen und einen Durchgang einer Kante des Hängers (22, 102) oder des Packoffs (30, 122) an der Stelle, die von dem Absetzvorsprung axial versetzt ist, vorbei zu erfassen, an der der Strahl (133, 139) von Ultraschallwellen von dem ersten Ultraschallsensor in die Bohrung emittiert wird,
und dadurch zu bestimmen, dass der Hänger oder der Packoff an dem Absetzvorsprung abgesetzt wurde.

2. Verfahren nach Anspruch 1, wobei das Verwenden des einen oder der mehreren Ultraschallsensoren, um zu detektieren, wann der Hänger oder der Packoff an der Zielstelle ist, einschließt:
Messen eines Abstands von dem ersten Ultraschallsensor (105, 130) zu dem Hänger (22, 102) oder dem Packoff (30, 122) basierend auf den erfassten Reflexionen; und
Ausgeben eines Signals, das angibt, dass der Hänger oder der Packoff an der Zielstelle ist, basierend auf dem gemessenen Abstand von dem ersten Ultraschallsensor zu dem Hänger oder dem Packoff.

3. Verfahren nach Anspruch 1, wobei das Verwenden des einen oder der mehreren Ultraschallsensoren, um zu detektieren, wann der Hänger oder der Packoff an der Zielstelle ist, umfasst:
Emittieren eines Strahls (131) von Ultraschallwellen über den Absetzvorsprung in der Bohrung des Bohrlochkopfs von einem ersten Ultraschallsensor (105, 130) des einen oder der mehreren Sensoren und Verwenden eines Ultraschallsensors des einen oder der mehreren Sensoren, um Reflexionen der Ultraschallwellen von dem Hänger oder dem Packoff (30, 122) zu erfassen, nachdem der Hänger oder der Packoff auf dem Absetzvorsprung abgesetzt wurde, und dadurch zu bestimmen, dass der Hänger oder der Packoff an dem Absetzvorsprung abgesetzt wurde
Emittieren eines Strahls (133, 139) der Ultraschallwellen von einem zweiten Ultraschallsensor (132, 138) des einen oder der mehreren Sensoren in die Bohrung des Bohrlochkopfs (100) an einer Stelle, die von dem Absetzvorsprung axial versetzt ist und Verwenden eines Ultraschallsensors des einen oder der mehreren Sensoren, um Reflexionen der Ultraschallwellen von dem Hänger (22, 102) oder dem Packoff (30, 122) zu erfassen und den Durchgang einer Kante des Hängers (22, 102) oder des Packoffs (30, 122) an der Stelle, die von dem Absetzvorsprung axial versetzt ist, vorbei zu erfassen, an der der Strahl (133, 139) von Ultraschallwellen von dem ersten Ultraschallsensor in die Bohrung emittiert wird, und dadurch unabhängig zu bestimmen, dass der Hänger oder der Packoff auf dem Absetzvorsprung abgesetzt wurde, und
basierend auf der unabhängigen Detektion über jeden des ersten Ultraschallsensors und des zweiten Ultraschallsensors, dass der Hänger oder der Packoff an der Zielstelle ist, Ausgeben eines Signals, das angibt, dass der Hänger oder der Packoff an der Zielstelle ist.

4. Verfahren nach Anspruch 1, 2 oder 3, ferner umfassend das Verwenden des einen oder der mehreren Ultraschallsensoren (105), um Konzentrizität des Hängers (22, 102) oder des Packoffs (30, 122) in einer Bohrung einer Bohrlochkopfanordnung einschließlich des Bohrlochkopfs zu detektieren.

5. Verfahren nach Anspruch 1, 2 oder 3, ferner umfassend das Verwenden des einen oder der mehreren Ultraschallsensoren (134), um die Position einer Dichtung (124) in einer Bohrung einer Bohrlochkopfanordnung einschließlich des Bohrlochkopfs zu detektieren.

6. Verfahren nach Anspruch 1, 2 oder 3, wobei der Hänger ein Gesperre (103) aufweist, um den Hänger innerhalb des Bohrlochkopfs zu sichern, und das Verfahren ferner umfasst:
Aktivieren des Gesperres (103); und
Verwenden des einen oder der mehreren Ultraschallsensoren (105, 136, 138), um zu detektieren, wann das Gesperre den Hänger innerhalb des Bohrlochkopfs gesichert hat.

7. Verfahren nach Anspruch 6, wobei der eine oder die mehreren Ultraschallsensoren einen ersten Sensor (130) und einen zweiten Sensor (132, 136) einschließen, das Verwenden des einen oder der mehreren Ultraschallsensoren, um zu detektieren, wann der Hänger (22, 102) an der Zielstelle ist, das Verwenden des ersten Sensors (130), um zu detektieren, wann der Hänger an der Zielstelle ist, einschließt und das Verwenden des einen oder der mehreren Ultraschallsensoren, um zu detektieren, wann das Gesperre (103) den Hänger innerhalb des Bohrlochkopfs gesichert hat, das Verwenden des zweiten Sensors (132, 136), um zu detektieren, wann das Gesperre (103) den Hänger innerhalb des Bohrlochkopfs gesichert hat, einschließt.

8. Verfahren nach Anspruch 7, wobei der erste Sensor (130) und der zweite Sensor (132, 136) an unterschiedlichen axialen Stellen entlang des Bohrlochkopfs positioniert sind.

9. Verfahren nach Anspruch 6, wobei das Verwenden des einen oder der mehreren Ultraschallsensoren, um zu detektieren, wann das Gesperre (103) den Hänger (22, 102) innerhalb des Bohrlochkopfs (100) gesichert hat, das Verwenden des einen oder der mehreren Ultraschallsensoren einschließt, um Bewegung einer Komponente (125) des Gesperres radial nach außen in eine Aussparung des Bohrlochkopfs zu detektieren.

10. Verfahren nach Anspruch 9, wobei das Verwenden des einen oder der mehreren Ultraschallsensoren, um Bewegung der Komponente (125) des Gesperres (103) radial nach außen in die Aussparung des Bohrlochkopfs zu detektieren, einschließt:
Erfassen einer ersten Ultraschallsignatur aus Ultraschallsignalen, die von dem einen oder den mehreren Ultraschallsensoren (105) emittiert und durch diese empfangen werden, vor dem Aktivieren des Gesperres, wobei die erste Ultraschallsignatur von einem Abstand der Komponente (125) des Gesperres von dem einen oder den mehreren Ultraschallsensoren abhängt; und
Erfassen einer zweiten Ultraschallsignatur aus Ultraschallsignalen, die von dem einen oder den mehreren Ultraschallsensoren emittiert und durch diese empfangen werden, nach dem Aktivieren des Gesperres, wobei die zweite Ultraschallsignatur von dem Abstand der Komponente des Gesperres von dem einen oder den mehreren Ultraschallsensoren abhängt und sich von der ersten Ultraschallsignatur aufgrund der Bewegung der Komponente (125) des Gesperres radial nach außen in die Aussparung des Bohrlochkopfs unterscheidet.

11. Verfahren nach Anspruch 6, wobei das Gesperre (103) einen Lockdown-Ring (125) einschließt.

12. Verfahren nach einem der vorstehenden Ansprüche, wobei der Ultraschallsensor (105, 130), um Reflexionen der Ultraschallwellen von dem Hänger (22, 102) oder dem Packoff (30, 122) zu erfassen, mit einer nach außen weisenden Oberfläche der Bohrlochkopfanordnung gekoppelt ist.

13. Einrichtung, umfassend:
eine Bohrlochkopfanordnung, einschließlich eines druckfesten Gehäuses (101), die eine Bohrung und einen Hänger (22, 102) oder einen Packoff (30, 122) aufweist, die konfiguriert sind, um innerhalb der Bohrung zu einer Zielposition, an der der Hänger oder der Packoff auf einem Absetzvorsprung in der Bohrung des Gehäuses (101) abgesetzt wird, abgesenkt zu werden,
wobei die Anordnung einen oder mehrere Ultraschallsensoren (105), die entlang des druckfesten Gehäuses (101) außerhalb der Bohrung positioniert sind, umfasst, wobei ein erster der Sensoren (105) konfiguriert ist, um einen Strahl (131, 133, 139) von Ultraschallwellen in die Bohrung zu emittieren und entweder
Reflexionen der Ultraschallwellen von dem Hänger oder dem Packoff innerhalb der Bohrung zu erfassen und ein Merkmal der erfassten Reflexionen, die das Absetzen oder Sperren des Hängers oder des Packoffs auf dem Absetzvorsprung innerhalb des druckfesten Gehäuses angeben, zu bestimmen, oder
Reflexionen der Ultraschallwellen von dem Hänger oder dem Packoff zu erfassen, die den Durchgang einer Kante des Hängers (22, 102) an einer Stelle, die von dem Absetzvorsprung axial versetzt ist, vorbei angeben, zu an der ein Strahl (133, 139) von Ultraschallwellen von dem ersten Ultraschallsensor in die Bohrung emittiert wird.

14. Einrichtung nach Anspruch 12, wobei der eine oder die mehreren Ultraschallsensoren einen Ultraschallsensor (105), der mit dem druckfesten Gehäuse (101) gekoppelt ist, einschließen, das druckfeste Gehäuse eine gekrümmte nach außen weisende Oberfläche aufweist und der Ultraschallsensor, der mit dem druckfesten Gehäuse gekoppelt ist, eine passende gekrümmte Kontaktoberfläche (110), die die gekrümmte nach außen weisende Oberfläche des druckfesten Gehäuses in Eingriff nimmt, einschließt.

## Revendications

1. Procédé d'installation d'un dispositif de suspension (22, 102) ou d'un presse-étoupe (30, 122) au niveau d'un emplacement cible au sein d'une tête de puits (100), la tête de puits ayant un ou plusieurs capteurs (104, 105), le procédé comprenant :
l'abaissement du dispositif de suspension ou du presse-étoupe au sein de la tête de puits jusqu'à une position cible au niveau de laquelle le dispositif de suspension ou le presse-étoupe est reçu sur un épaulement de réception dans l'alésage de la tête de puits ;
moyennant quoi l'utilisation du ou des capteurs pour détecter quand le dispositif de suspension ou le presse-étoupe est au niveau de l'emplacement cible par :
l'émission d'un faisceau (131) d'ondes ultrasoniques jusque dans un alésage d'un ensemble de tête de puits en travers de l'épaulement de réception dans l'alésage de la tête de puits (100) à partir d'un premier capteur ultrasonique (105, 130) du ou des capteurs, le premier capteur ultrasonique étant placé le long d'un boîtier contenant de la pression à l'extérieur de l'alésage, et l'utilisation d'un capteur ultrasonique (105, 130) du ou des capteurs pour détecter des réflexions des ondes ultrasoniques à partir du dispositif de suspension (22, 102) ou du presse-étoupe (30, 122) après que le dispositif de suspension ou le presse-étoupe est reçu sur l'épaulement de réception,
ou l'émission d'un faisceau (133, 139) des ondes ultrasoniques à partir d'un premier capteur ultrasonique du ou des capteurs jusque dans l'alésage de la tête de puits (100) au niveau d'un emplacement axialement décalé par rapport à l'épaulement de réception, le premier capteur ultrasonique étant placé dans un boîtier contenant de la pression à l'extérieur de l'alésage, et l'utilisation d'un capteur ultrasonique (105, 130) du ou des capteurs pour détecter des réflexions des ondes ultrasoniques à partir du dispositif de suspension (22, 102) ou du presse-étoupe (30, 122) et détecter le passage d'un bord du dispositif de suspension (22, 102) ou du presse-étoupe (30, 122) au-delà de l'emplacement axialement décalé par rapport à l'épaulement de réception au niveau duquel le faisceau (133, 139) d'ondes ultrasoniques à partir du premier capteur ultrasonique est émis jusque dans l'alésage,
et déterminer de ce fait que le dispositif de suspension ou le presse-étoupe a été reçu au niveau de l'épaulement de réception.

2. Procédé selon la revendication 1, dans lequel l'utilisation du ou des capteurs ultrasoniques pour détecter quand le dispositif de suspension ou le presse-étoupe est au niveau de l'emplacement cible comporte :
la mesure d'une distance à partir du premier capteur ultrasonique (105, 130) jusqu'au dispositif de suspension (22, 102) ou au presse-étoupe (30, 122) en fonction des réflexions détectées ; et
la génération d'un signal indiquant que le dispositif de suspension ou le presse-étoupe est au niveau de l'emplacement cible en fonction de la distance mesurée à partir du premier capteur ultrasonique jusqu'au dispositif de suspension ou au presse-étoupe.

3. Procédé selon la revendication 1 dans lequel l'utilisation du ou des capteurs ultrasoniques pour détecter quand le dispositif de suspension ou le presse-étoupe est au niveau de l'emplacement cible comprend :
l'émission d'un faisceau (131) d'ondes ultrasoniques en travers de l'épaulement de réception dans l'alésage de la tête de puits à partir d'un premier capteur ultrasonique (105, 130) du ou des capteurs et l'utilisation d'un capteur ultrasonique du ou des capteurs pour détecter des réflexions des ondes ultrasoniques à partir du dispositif de suspension ou du presse-étoupe (30, 122) après que le dispositif de suspension ou le presse-étoupe est reçu sur l'épaulement de réception et déterminer de ce fait que le dispositif de suspension ou le presse-étoupe a été reçu au niveau de l'épaulement de réception
l'émission d'un faisceau (133, 139) des ondes ultrasoniques à partir d'un second capteur ultrasonique (132, 138) du ou des capteurs jusque dans l'alésage de la tête de puits (100) au niveau d'un emplacement axialement décalé par rapport à l'épaulement de réception et l'utilisation d'un capteur ultrasonique du ou des capteurs pour détecter des réflexions des ondes ultrasoniques à partir du dispositif de suspension (22, 102) ou du presse-étoupe (30, 122) et détecter le passage d'un bord du dispositif de suspension (22, 102) ou du presse-étoupe (30, 122) au-delà de l'emplacement axialement décalé par rapport à l'épaulement de réception au niveau duquel le faisceau (133, 139) d'ondes ultrasoniques à partir du premier capteur ultrasonique est émis jusque dans l'alésage et déterminer de ce fait indépendamment que le dispositif de suspension ou le presse-étoupe a été reçu au niveau de l'épaulement de réception, et
en fonction de la détection indépendante par l'intermédiaire de chacun du premier capteur ultrasonique et du second capteur ultrasonique du fait que le dispositif de suspension ou le presse-étoupe est au niveau de l'emplacement cible, la génération d'un signal indiquant que le dispositif de suspension ou le presse-étoupe est au niveau de l'emplacement cible.

4. Procédé selon la revendication 1, la revendication 2 ou la revendication 3, comprenant en outre l'utilisation du ou des capteurs ultrasoniques (105) pour détecter la concentricité du dispositif de suspension (22, 102) ou du presse-étoupe (30, 122) dans un alésage d'un ensemble de tête de puits comportant la tête de puits.

5. Procédé selon la revendication 1, la revendication 2 ou la revendication 3, comprenant en outre l'utilisation du ou des capteurs ultrasoniques (134) pour détecter la position d'un joint d'étanchéité (124) dans un alésage d'un ensemble de tête de puits comportant la tête de puits.

6. Procédé selon la revendication 1, la revendication 2 ou la revendication 3, dans lequel le dispositif de suspension a un mécanisme de verrouillage (103) destiné à fixer le dispositif de suspension au sein de la tête de puits, et le procédé comprend en outre :
l'activation du mécanisme de verrouillage (103) ; et
l'utilisation du ou des capteurs ultrasoniques (105, 136, 138) pour détecter quand le mécanisme de verrouillage a fixé le dispositif de suspension au sein de la tête de puits.

7. Procédé selon la revendication 6, dans lequel le ou les capteurs ultrasoniques comportent un premier capteur (130) et un second capteur (132, 136), l'utilisation du ou des capteurs ultrasoniques pour détecter quand le dispositif de suspension (22, 102) est au niveau de l'emplacement cible comporte l'utilisation du premier capteur (130) pour détecter quand le dispositif de suspension est au niveau de l'emplacement cible, et l'utilisation du ou des capteurs ultrasoniques pour détecter quand le mécanisme de verrouillage (103) a fixé le dispositif de suspension au sein de la tête de puits comporte l'utilisation du second capteur (132, 136) pour détecter quand le mécanisme de verrouillage (103) a fixé le dispositif de suspension au sein de la tête de puits.

8. Procédé selon la revendication 7, dans lequel le premier capteur (130) et le second capteur (132, 136) sont positionnés au niveau d'emplacements axiaux différents le long de la tête de puits.

9. Procédé selon la revendication 6, dans lequel l'utilisation du ou des capteurs ultrasoniques pour détecter quand le mécanisme de verrouillage (103) a fixé le dispositif de suspension (22, 102) au sein de la tête de puits (100) comporte l'utilisation du ou des capteurs ultrasoniques pour détecter un déplacement d'un composant (125) du mécanisme de verrouillage radialement vers l'extérieur jusque dans un évidement de la tête de puits.

10. Procédé selon la revendication 9, dans lequel l'utilisation du ou des capteurs ultrasoniques pour détecter un déplacement du composant (125) du mécanisme de verrouillage (103) radialement vers l'extérieur jusque dans l'évidement de la tête de puits comporte :
la détection d'une première signature ultrasonique à partir de signaux ultrasoniques émis à partir du ou des capteurs ultrasoniques (105) et reçus par ceux-ci avant l'activation du mécanisme de verrouillage, dans lequel la première signature ultrasonique dépend d'une distance du composant (125) du mécanisme de verrouillage par rapport au ou aux capteurs ultrasoniques ; et
la détection d'une seconde signature ultrasonique à partir de signaux ultrasoniques émis à partir du ou des capteurs ultrasoniques et reçus par ceux-ci après l'activation du mécanisme de verrouillage, dans lequel la seconde signature ultrasonique dépend de la distance du composant du mécanisme de verrouillage par rapport au ou aux capteurs ultrasoniques et diffère de la première signature ultrasonique en raison du déplacement du composant (125) du mécanisme de verrouillage radialement vers l'extérieur jusque dans l'évidement de la tête de puits.

11. Procédé selon la revendication 6, dans lequel le mécanisme de verrouillage (103) comporte un anneau de verrouillage (125).

12. Procédé selon l'une quelconque revendication précédente dans lequel le capteur ultrasonique (105, 130) destiné à détecter des réflexions des ondes ultrasoniques à partir du dispositif de suspension (22, 102) ou du presse-étoupe (30, 122) est couplé à une surface faisant face vers l'extérieur de l'ensemble de tête de puits.

13. Appareil comprenant :
un ensemble de tête de puits comportant un boîtier contenant de la pression (101) ayant un alésage et un dispositif de suspension (22, 102) ou un presse-étoupe (30, 122) conçu pour être abaissé au sein de l'alésage jusqu'à une position cible au niveau de laquelle le dispositif de suspension ou le presse-étoupe est reçu sur un épaulement de réception dans l'alésage du boîtier (101)
dans lequel l'ensemble comprend un ou plusieurs capteurs ultrasoniques (105) positionnés le long du boîtier contenant de la pression (101) à l'extérieur de l'alésage avec un premier des capteurs (105) étant conçu pour émettre un faisceau (131, 133, 139) d'ondes ultrasoniques dans l'alésage et soit
pour détecter des réflexions des ondes ultrasoniques à partir du dispositif de suspension ou du presse-étoupe au sein de l'alésage, et déterminer une caractéristique des réflexions détectées indiquant la réception ou le verrouillage du dispositif de suspension ou du presse-étoupe sur l'épaulement de réception au sein du boîtier contenant de la pression, soit
pour détecter des réflexions des ondes ultrasoniques à partir du dispositif de suspension ou du presse-étoupe indiquant le passage d'un bord du dispositif de suspension (22, 102) au-delà d'un emplacement axialement décalé par rapport à l'épaulement de réception au niveau duquel un faisceau (133, 139) d'ondes ultrasoniques à partir du premier capteur ultrasonique est émis dans l'alésage.

14. Appareil selon la revendication 12, dans lequel le ou les capteurs ultrasoniques comportent un capteur ultrasonique (105) couplé au boîtier contenant de la pression (101), le boîtier contenant de la pression a une surface incurvée faisant face vers l'extérieur, et le capteur ultrasonique couplé au boîtier contenant de la pression comporte une surface de contact incurvée d'accouplement (110) venant en prise avec la surface incurvée faisant face vers l'extérieur du boîtier contenant de la pression.
